(19) Europäisches Patentamt
European Patent Office
Office européen des brevets

(11) **EP 2 056 221 A1**

(12) **EUROPEAN PATENT APPLICATION**

(43) Date of publication:
**06.05.2009 Bulletin 2009/19**

(51) Int Cl.:
**G06F 17/30** (2006.01)

(21) Application number: **07119682.8**

(22) Date of filing: **30.10.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicants:
- **MITSUBISHI ELECTRIC CORPORATION**
  **Chiyoda-ku**
  **Tokyo 100-8310 (JP)**

- **Mitsubishi Electric R&D Centre Europe B.V.**
  **1119 NS  Schiphol Rijk (NL)**

(72) Inventor: **Foube, Laurent**
  **35340, LIFFRE (FR)**

(74) Representative: **Cabinet Plasseraud**
  **52, rue de la Victoire**
  **75440 Paris Cedex 09 (FR)**

(54) **Split state machines for matching**

(57)     This is a method of string matching using N split state machines corresponding in combination to an original state machine which is adapted to recognize at least one string of characters based on successive input symbols.

Each of the N split state machines is in charge of handling a respective part of an input symbol. A partial matching vector value is associated to each state of each split state machine.

N memory contexts (11) are in charge of storing information which allow determining a next state depending on a current state and on the part of the input symbol being currently processed.

In said N memory contexts, an associated identifier is indicated in association with each state of said N split state machines.

An association of the identifiers and the partial matching vector values is stored in a common memory (12) which is shared by said N split state machines.

FIG.2.

EP 2 056 221 A1

**Description**

BACKGROUND OF THE INVENTION

1. Technical Field

The present invention relates generally to methods for string matching.

A string matching method allows searching for multiple strings inside a text. It can be used for example when implementing a network packet's inspection system or more generally in any type of application where it is necessary to perform multiple string matching inside a text, or in applications like Intrusion Detection System, IDS, or like antivirus.

2. Related Art

Strings to be matched can be grouped in a "string matching automata" which is a DFA (standing for 'Deterministic Finite Automaton') graph generated with an Aho Corasick algorithm. A DFA is a finite state machine wherein there is one and only one transition from a current state to a next state for each pair formed by a state and an input symbol.

Based on a DFA, for each input symbol of a text to be matched, a transition to a state is given according to a transition function. When the last input symbol of the text has been processed, it is then possible to decide if the text corresponds to a string known by the DFA or not. Such a decision depends on the final state of the DFA. Indeed, if this final state of DFA is an accepting state, that means that the text corresponds to one of the strings known in DFA, and if the final state of DFA is a non-accepting state, the text does not correspond to a string known by the DFA.

But, this type of automatons requires a large amount of storage. This characteristic is particularly a disadvantage when these automatons are implemented in component such as a FPGA (for 'Field Programmable Gate Array').

In order to limit this inconvenient, it is described in the document 'Performance of FPGA implementation of Split architecture for intrusion detection system' by Hung-Jip Jung, Zachary K. Baker, and Viktor K. Prasanna a split architecture which allows converting a large state machine into a plurality of bit-split state machines. Based on such a conversion, the memory management can be enhanced and the required amount of memory can be reduced.

Split algorithms, such as the one described in the document previously cited, has been specifically designed for multiple string matching application. It is used to convert a source DFA graph, which is adapted to recognize some strings of characters based on input symbols belonging to an input alphabet (ASCII code for example), into several "smaller" DFAs, or split state machines, each of these smaller DFAs requiring less memory capacity than the initial DFA. Each of these smaller DFAs uses only a fraction, or a part, of the input symbol. In this context, the source automata has been shown to be equivalent to a kind of "product" of the smaller DFAs. The different smaller DFAs are evaluated together in parallel, and final states of the source DFA are identified by combining the results of the smaller DFAs.

Due to the disconnected nature of the multiple split state machines, partial match vector values (PMV) are respectively associated to all states of all split state machines, and the respective values of these PMVs associated with the final states of split state machines are used to reconnect the final states of these split state machines together. More precisely, an operation of logical AND is applied to the respective values of the PMV to form the whole full match vector (FMV) which allows to take a decision on the recognition of a text.

This architecture is generally programmable and thus allows updating, at run time, the set of strings to be matched. An algorithm is used to generate the memory efficient data structures that represent the original state machine behaviour, based on bit-split conversion.

Such architecture allows storing a compact representation of large original automata.

However, each split state machine requires a memory context with large data word. Indeed, for each split state machine, several links, which correspond to different possible transitions from a state to another one, and a PMV are stored in every word of the state memory.

The number of bits handled by a split state machine is directly linked with the number of next states, i.e. the number of links that are stored in each word. More precisely, the size of a link corresponds to:

$$LOG_2(X)$$

where X is the maximum number of states in the split state machine, and $LOG_2$ is the closest integer greater than log2 (base 2 logarithm).

The number of accepting states which are handled by a split state machine also influences the data word size used to store the PMV value.

These constraints limit the number of accepting states that can be handled by a state machine. For string matching applications, the set of strings is partitioned into many subsets and evaluated on different split state machines. While this architecture is well adapted for small state machines handling few states and few accepting states, it is not as efficient when a large state machine with possibly many accepting states has to be implemented, for example when it is required to analyse long strings. The word width of the state memory increases rapidly with the number of accepting states, which is directly linked with the PMV value size and the total number of states, which is directly linked with links size.

Consequently, there is a need for an enhancement of a split state machine architecture, or split state machine.

SUMMARY OF THE INVENTION

In a first aspect, the invention proposes thus a method of string matching using N split state machines corresponding in combination to an original state machine which is adapted to recognize at least one string of characters based on successive input symbols. Each of the N split state machines is in charge of handling a respective part of an input symbol. A partial matching vector value is associated to each state of each split state machine. N memory contexts are in charge of storing information which allows determining a next state depending on a current state and on the part of the input symbol being currently processed.

According to this method, in the N memory contexts, an associated identifier is indicated in association with each state of the N split state machines; and an association of the identifiers and the partial matching vector values is stored in a common memory which is shared by the N split state machines.

Under these conditions, it is possible to reduce the memory capacity required to associate the PMV values to each state of each split state machine. Indeed, the use of an identifier allows avoiding storing directly in association to each state the corresponding PMV value. Such an identifier can be substantially smaller than the PMV value itself. In this context, a memory is used to be shared by all the different split state machines and contains the correspondence between the different PMV values and their respective identifier.

Advantageously, such characteristics allow reducing the memory requirement needed for the storage of PMV values associated to all states in the plurality of split state machines. Indeed, PMVs consume a lot of memory in an architecture of the background art because they are respectively associated with all states of all split state machines.

A first state type corresponds to 'accepting states' which are the states corresponding to accepting states in a split state machine. A second state type corresponds to 'non accepting states' which are all the other states in the corresponding split state machine. In the context of the present invention, a non accepting state corresponds to a state which does not correspond to a known string to be matched. On the contrary, an accepting state is a state which corresponds to at least a known string to be matched.

Advantageously, in one embodiment of the present invention, these two types of states can be handled differently.

The maximum number of different PMV values in a split state machine is g+1, where g is the number of known strings which can be matched by the source DFA. Moreover, sometimes, a PMV value is used more than one time for different states in the same split state machine.

The memory context contains the links_memory, as refered in the description, as well as a scheme to indicate the PMV_ID associated with each state.

The common memory corresponds to a 'PMV_memory'. It can comprise different partial matching vector values and the associated identifiers correspond to respective offsets of storage in the common memory.

Under these conditions, the memory context relative to each split state machine stores in correspondence to each state, the offset associated to the PMV value which corresponds to this state. The offset is smaller than the PMV value and the memory requirement is reduced relatively to the case wherein the complete PMV values are stored in association to all states in the memory context per split state machine.

Alternatively, one state context per state can be stored in the memory context referred with a state label and the associated identifier can be directly the state label. A state context contains a state with all corresponding next states.

Here, the memory amount requirement is more reduced. As a matter of fact, in these conditions, the state as it is stored in the links_memory, meaning state label, represents directly itself an offset of the PMV value in the PMV_ memory, which is associated to it, and it is not required to store the corresponding offsets in the memory context of each split state machine.

When the states as they are stored, meaning the state labels, represent directly the respective associated PMV values, in one embodiment, the method comprises the following steps:

- generating said N split state machines from said original source state machine, each of said N split state machines comprising different states which are referred with respective initial labels ; and
- replacing the initial label by a new label, in order to obtain, for each state of each split state machines, a new label equal to an offset of the partial matching vector value which is associated to said state and which is stored in the common memory.

Preferably, the different partial matching vector values are stored only one time in the common memory.

In the context of the present invention, a state label may correspond to a number naming a given state.

A second aspect of the invention relates to a device adapted to carry out a method of string matching using N split state machines corresponding in combination to an original state machine which is adapted to recognize at least one string of characters based on successive input symbols ; each of the N split state machines being in charge of handling a respective part of an input symbol ;
a partial matching vector value being associated to each state of each split state machine ;

The device comprises:

- N memory contexts being in charge of storing information which allow determining a next state depending on a current state and on the part of the input symbol being currently received; in the N memory contexts, an associated identifier is indicated in association with each state of the N split state machines; and
- a common memory adapted to store an association of the identifiers and the partial matching vector values, the common memory being shared by the N split state machines.

Such a device can comprise all units required to carry out a method of string matching according to the first aspect of the present invention.

In such a device, the common memory can comprise different partial matching vector values and the associated identifiers can correspond to respective offsets of storage in said common memory.

In one embodiment, the memory context being adapted to store each state referred with a state label, the associated identifier is directly the state label.

This device can further comprise :

- a generation unit adapted for generating said N split state machines from said original source state machine, each of said N split state machines comprising different states which are referred with respective initial labels ;
- a replacing unit adapted for replacing the initial label by a new label, in order to obtain, for each state of each split state machines, a new label equal to an offset of the partial matching vector value which is associated to said state and which is stored in the common memory.

In a third aspect, the invention proposes a computer program product comprising instructions for implementing the steps of a method according to the first aspect of the invention, when loaded and run on computer means of a device according to the second aspect of the present invention.

BRIEF DESCRIPTION OF THE DRAWINGS

Further features and advantages of the present invention will become more apparent from the description below. The latter is given purely by way of illustration and should be read in conjunction with the appended drawings, of which:

- Figure 1 illustrates an architecture of a module for split state machine according to one embodiment of the present invention ; and
- Figure 2 describes memory architecture according to another one embodiment of the present invention.

DESCRIPTION OF PREFERRED EMBODIMENTS

The present invention proposes to suppress PMV values storage in each memory word of split state machines in order to reduce the memory amount used for these split state machines.

In one embodiment, a souce DFA graph is transformed in data structures adapted to be loaded in a circuit like a FPGA or like an ASIC which is in charge of searching known character strings. The source DFA can be generated by carrying out an Aho-Corasick algorithm for instance.

The source DFA graph comprises transitions depending on possible values of an input symbol extracted from the text to be matched and on the current state in the considered split state machine.

In the context of the split state machines, the input symbol is divided in several parts which are respectively handled by the different split state machines. For instance, when the input symbol is a word of 8 bits, it can be divided in 4 parts, each part corresponding to 2 bits. Advantageously, each part can be handled by one of split state machines obtained from the source DFA graph.

The PMV_memory is shared by the different split state machines. This memory is updated based on different transformations relative to the respective different parts of the input symbol carried out at the generation of the different split state machines from the source state machine DFA.

To increase performances, the PMV_memory can be a multiport memory in order to allow a concurrent access only in read mode which can simplify the design of this memory in a full custom ASIC.

In one embodiment, initially, this PMV_memory contains only one PMV corresponding to the null vector. This value of PMV corresponds to a non accepting state.

The different parts of the input symbol can correspond respectively to bits 1 and 0, to bits 3 and 2, to bits 5 and 4, and to bits 7 and 6, for an input symbol of 8 bits.

For each part of the input symbol, at a first step, the source DFA is transformed in split machines for the bits belonging to the considered part. Each split state machine contains a plurality of different states to which are associated several links (or next states) and a PMV value. At this step, a transition table associated to each split state machine is updated with the next possible states which are associated with each state of the considered split state machine, this table being referred by links_memory.

The links_memory is adapted to store 'link data' which are data relative to link from one state, which is a current state, in the split state machine to another one, which is a next state.

Such a memory can be divided in two parts, a first part being dedicated to accepting states range, and a second part which is dedicated to non accepting states range. In one embodiment, there are 4 split state machines and g known strings to be matched. In this condition, the state values between 0 and 4*g-1 can correspond to accepting states or non accepting states; and state values from value '4*g' and beyond can correspond to non accepting states.

This memory can be an internal or an external memory. Its width can be small when the links are stored sequentially instead of being available in parallel. This correspondence of links with next states allows handling larger state machines as well as different sizes of input symbol without having a strong impact on the memory data width. A memory of 16 bit data width allows, for instance, handling states machines with up to 64K states.

Thereafter, the following notations are used:

- b is the number of bits from input symbol managed by a split state machine. In the described embodiment, b is equal to 2;

- p is a number of bits required to code a state (current state or next state) ;

- g is the number of accepting state managed in the source DFA or source state machine ; and

- L is the number of bits required to address the memory links_memory 105, where L=p+b;

- T is the number of bits required to address the type memory 112 and the PMV memory 12, T verifies the following equations:
$T \leq p$ ; and

$$T = Log_2((\alpha / b) \times N) = Log_2(4 \times N)$$

- $\alpha$ is the number of bits of input symbol

- $(\alpha/b)$ is the number of split state machines that compose the module.

The number of bits from input symbol which is handled influences the number of possible next states accessible from every state. For instance, when p is equal to 9, meaning 512 states maximum to be handled, and b is equal to 2, then the size required for this memory is 18432 bits, corresponding to 512*4*9 bits.

Then, at a second step, the used PMVs in this split state machine are enumerated and the PMV_memory is updated on the basis of this enumeration in order to contain the different values of PMV, preferably only one time without duplication.

At a third step, a correspondence between the states and the corresponding PMV values is carried out, in order to avoid to store all PMV values for each states in memory contexts of respective split state machines.

These three steps are carried out for all split state machines. At the end, when all different data structures relative to all split state machines are created, it is then possible to update the PMV_memory. This PMV_memory contains the different PMV values used in the different split state machines.

Regarding the third step, it is possible in a first alternative, to replace, in the memory context of each split state machine, the PMV values by their respective identifiers, which correspond to the corresponding offsets in the PMV_ memory, or in a second alternative, to remove the PMV values and to rename the states of the considered split state machine in order to match these states directly with the offsets of the respective associated PMV values as stored in the PMV_memory. Stated otherwise, in the second alternative, the label of a state is directly equal to the offset of the PMV values which is associated to this state.

In the first alternative, the PMV identifiers are stored in a memory per split state machine, referred as PMV_ID_memory, which contains one entry per state handled in this split state machine. Each PMV value is stored in PMV_memory at an offset corresponding directly to its PMV identifier stored in the PMV_ID_memory.

In the second alternative, by affecting to all accepting states the values corresponding to the offset of their PMV values in the table (PMV_memory), no lookup is required to find the PMV: all memories can be addressed simultaneously.

The present invention is not limited to such embodiment and covers all embodiments allowing to replace, in a memory in charge of storing information which allow determining a next state, the explicit PMV value by a corresponding associated PMV identifier in order to reduce the memory amount requirement used for the storage of the PMV value associated with each state of a given split state machine.

For instance, in the second alternative, each state as it is stored in the links_memory, meaning under its storing form which is referred as a state label, indicates directly the offset of its associated PMV value. Under these conditions, it is not required that additional information is stored in the links_memory, because the state label itself is the corresponding offset directly. It is noted that in this second alternative, a PMV_ID_memory per split state machine is not required.

For this embodiment, a step of state renaming is further carried out to obtain such a direct correspondence between the state labels and the offset of the PMV values respectively.

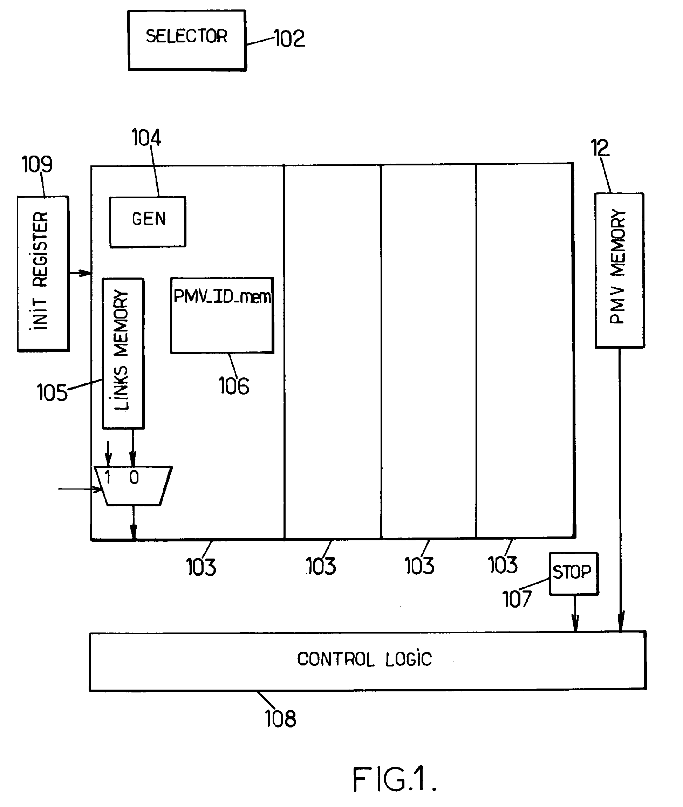

Figure 1 illustrates an architecture of a module for split state machine according to one embodiment of the present invention, corresponding to the first alternative, where the correspondence between the states and their associated PMV values in based on PMV identifiers corresponding to offsets in a PMV_memory.

Such a module comprises 4 split state machines 103.

Each split state machine 103 can comprise an address generator 'SPLIT_state machine_addr_gen' 104 which is adapted to generate addresses in different memories used in each split state machine, the memories 'links_memory' 105 and 'PMV_ID_memory' 106. Both memories are in the context memory associated to the corresponding split state machine. On this aspect, the present invention is not limited. For instance, the address in the memory PMV_ID_memory can be provided directly by the current state in the split state machine, and the address in links_memory can be generated by concatenation of the current state and bits of the part of the input symbol which are handled by the considered split state machine.

Each split state machine further comprises the memory 'PMV_ID_memory' 106 in order to store the PMV identifier associated to each state of the considered split state machine. This memory 106 comprises at least a number of words which allows coding a PMV identifier, meaning offset, which is equal to the number of states managed in a split state machine:

$$2^p = 2^{(L-n)}$$

The size of a word is $LOG_2(4g+1)$ bits.

Each split state machine further comprises the memory links_memory 105, wherein the links, or next states, are stored in correspondence with each state of a split state machine. This memory contains at least $2^n.2^p=2^L$ words, each word being of p bits to code a value of next state.

In one embodiment, an input data selector 102 receives the input symbol to be matched and directs the parts of the input symbol respectively towards the split state machines.

This selector allows selecting the parts of the input symbol to forward respectively to the split state machines. Each part of the input symbol can be composed by any bits of the input symbol. For instance, it is possible to form the different parts of the input symbol by selecting consecutive bits from the input symbol.

This selector 102 is not required, but it can be useful, in some conditions, notably when information relative to several source DFAs are stored in memory.

In order to be able to stop the process of string matching through these split state machine, it is possible to introduce a stop condition module 107 adapted to detect stop conditions. This module can be based on different conditions.

It can be advantageous to be able to stop a matching process either when a string is matched, or when the matching process fails. Specific information must be added to allow identifying stop states. Typically, two stop states can be added : stop_ok and stop_err. Stop_ok is used to stop the matching process when a string has been matched; stop_err is used otherwise. Those states can be present in the original DFA.

Different solutions are possible to identify those states in the split state machine. For instance, it is possible to add bits to PMV values, for instance one bit per stop condition, or to add bits to links_memory. In one embodiment, an other memory is managed per split state machine : a type_memory. This memory allows indicating if a state stored in the links_memory corresponds to an accepting state or to a non-accepting state. In these conditions, the stop condition can be stored in the type_memory alternatively.

Each solution comes with its own constraints and/or advantages. If bits are added to PMV values, it may be difficult to identify in one clock cycle that a stop state has been reached. In this case, the stop state must be a "trap" state. Indeed, once in this state, even if the split state machine continues to be evaluated, no more input characters should be handled and the state machine stays in this same state. On the other hand, this solution allows handling numerous distinguishable stop states, due to large width of PMV.

The solution corresponding to add stop bits to the links_memory is a simple solution if there is only few stop bits. In this case, even if decoding a PMV takes a long time, it has no effect on performances of split state machine, since stop condition is known at the same time that next state. The main disadvantage of this solution is its memory consumption, since the information is present in all links, of all states.

At a split state machine level, the different memories can be implemented according to only one memory or according to a plurality of memories. Anyway, the split state machine memory context 11 is used to handle the course from a state to another one in the corresponding split state machine, meaning from the current state to the next state. This context memory is detailed below in the second alternative embodiment.

Moreover, in one embodiment, an initialization register 109 corresponds to a unit adapted for initializing current state in the different split state machines.

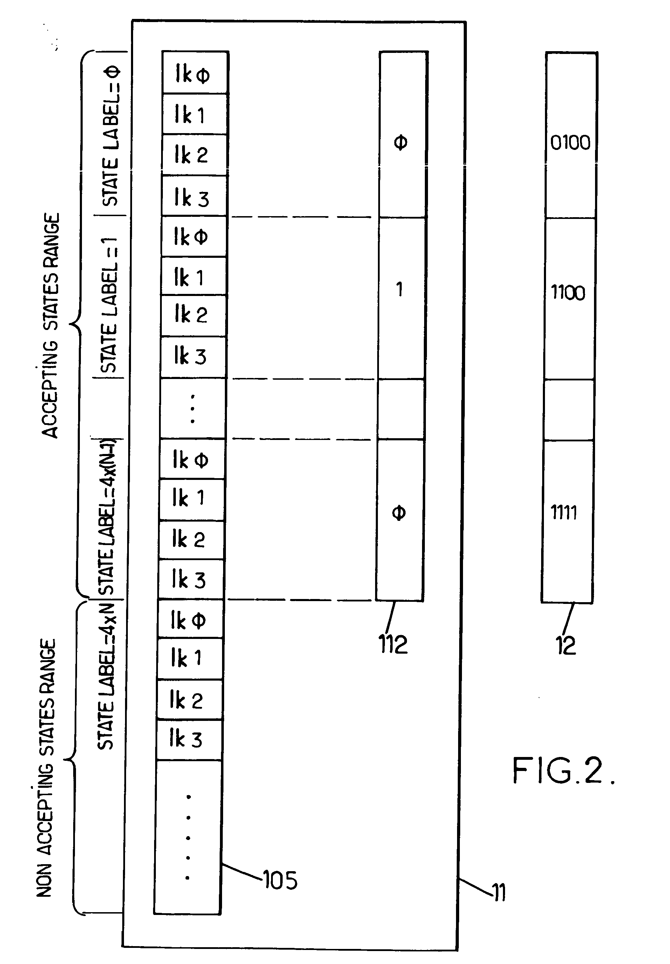

Figure 2 describes a memory architecture according to one embodiment corresponding to the second alternative.

In this embodiment, the memory context 11 can be dedicated to only one split state machine and the memory 12 can be advantageously shared by all the split state machines.

According to the following embodiment, the input symbol is a word of 8 bits, and it is divided in 4 parts, each part corresponding to 2 bits. Advantageously, each part is handled by one of split state machines obtained from the source DFA graph.

The memory context 11 contains the links_memory 105 wherein, associated to a given split state machine and for each state, state0 to state xxx of this split state machine, 4 memory locations one per potential link: link0, link1, link2 and link3. For a given state corresponding to an accepting state, a lot of memory locations corresponding to data associated to an accepting state are not used because there are g accepting states maximum in a split state machine.

In order to optimise the usage of these memory locations, the memory locations which is not used can be used to store data link associated to a non accepting state.

In this condition, a bit type is associated with these memory locations, to indicate if a memory location corresponds to a non accepting state, even it is in the area dedicated to the data links associated to accepting states.

A 'type_memory' 112 is adapted to allow determining if a state value corresponds to an accepting state or to a non accepting state. The type_memory is addressed by the state label of a split state machine. This memory returns the type bit, which is set when the state, in the range 0 to 4g-1, is an accepting state; otherwise the memory returns à '0' which means that this is a normal state.

The required capacity for the type_memory can be:

$$(\alpha/b) * g \text{ bits}$$

with g is the number of accepting states in the original state machine,
b is the number of bits handled by every split state machine.
$(\alpha/b)$ is the number of split state machines corresponding to the original split state machine; and
$\alpha$ is the number of bits of an input symbol.

For simplicity, it is possible to dedicate a bit of the links_memory to encode this information for every word. But this is not required. Indeed, this information is only required for the $(\alpha/b) * g$ first states of the split state machine.

This bit is used to allow using the states values not affected to accepting states and comprised in interval 0 to $[(\alpha/b) * g -1]$, corresponding to "accepting states interval". If 'type' bit is cleared, it means that it is a non accepting state, otherwise (when set) it means that the corresponding state is an accepting state.

In one embodiment, all states of which values are superior or equal to $(\alpha/b) * g$, are non accepting states, while states, of which values are inside "special state interval", are either accepting or non accepting states depending on value of 'type' bit.

A comparator can be associated to each split state machine in order to detect if the current state is in the non accepting state interval or not. Thus, there is no need to use a 'type' bit for states in this area.

The following table illustrates that aspect.

| State_Value | Type | State_Type |
|---|---|---|
| 0...[($\alpha$/b)*g-1] | 0 | Non accepting |
| 0...[($\alpha$/b)*g-1] | 1 | Accepting |
| >=[($\alpha$/b)*g-1] | - | Non accepting |

Of course, if there is one type bit in every word of links_memory, then no comparator is needed.

In one embodiment, it can be easier to design links_memory and type_memory in the same memory. No limitation is attached to this aspect.

The PMV_memory can be implemented as an internal memory due to its large width but relatively modest depth. It should be efficient to make the PMV memory shared between the different split state machines.

The size of this PMV_memory can be bounded to:

$$(\alpha/b)*g \text{ words of g bits}$$

Such a memory capacity allows storing all different PMV values for all the accepting states in all split state machines.

In one embodiment, advantageously, only the accepting states have respective PMV values which are not null, and all non accepting states have a PMV null. It is thus useless to store it if non accepting states are identified. Since the number of accepting states is generally small compared to the whole number of states of a split state machine, such a memory management can represent a huge saving of memory.

In addition, the required capacity to store the table is generally better than the maximum theoretical capacity obtained previously because there is generally some redundancy between the different PMV values of the different state machines.

In such an architecture, in one embodiment, there is a control logic unit. This logic is responsible of collecting the signals provided by all the split state machines. If all these signals indicate an accepting state, then the partial match vector has a value not null and can be used, otherwise it is a non accepting state. When an accepting state is detected, the partial match vector is decoded in order to generate an identifier inside the source automata.

This control logic unit can be responsible of generating PMV values.

In another embodiment, a comparator, which is adapted to detect link data associated to a non accepting state and which is placed in the area associated to the accepting state, is used. The use of the comparator allows huge saving of memory compared to adding one type bit to every word in the links_memory. Indeed, addition of such a bit type represents a memory requirement of:

$$(8/b) * g \text{ bits instead of } 2^b * 2^p \text{ bits.}$$

The links_memory and the type_memory can be addressed simultaneously.

Advantageously, the links_memory requires no more than 4*g words, which correspond to the 4*g different PMV values.

Strings can be grouped according to their size, or according to another criterion which guaranties that a particular PMV value is used only once in a split state machine.

In the architecture described in reference with Figure 2, in one embodiment, an initialization register, like the initialization register 109 illustrated on Figure 1, can be introduced.

In the following sections, one embodiment of the present invention is illustrated based on an example. According to this example, the original state machine is adapted to recognize the following set of strings:

- his

- he

- hers

- she

This original state machine is split into 4 split state machines, each of them handling 2 bits of an input symbol. The description of the behaviour of each split state machine is described by a transition table.

In such a table, first column represents the current state. Each line then contains a representation of the state context corresponding to this current state, meaning the different possible next states depending on the different values that can be taken by the part of the input symbol handled by the considered split state machine, meaning values 00, 01, 10 and 11 on the first line. On the first column, the values from 0 to 9 correspond to the current state. The last column represents the PMV value associated with the current state.

The following table 1 illustrates the handling performed by the first split state machine. This split state machine handles the bits 7:6 of input symbol.

|  | 00 | 01 | 10 | 11 | PMV |
|---|---|---|---|---|---|
| 0 (initialization state) | 0 | 1 | 0 | 0 | 0000 |
| 1 | 0 | 2 | 0 | 0 | 0000 |
| **2** | 0 | 3 | 0 | 0 | **1000** |
| **3** | 0 | 4 | 0 | 0 | **1110** |
| **4** | 0 | 4 | 0 | 0 | **1111** |

Five states are managed by the first split state machine comprising 3 states which could correspond to accepting states (which are in bold).

The following table 2 illustrates the handling performed by the second split state machine. This split state machine handles the bits 5:4 of input symbol.

|  | 00 | 01 | 10 | 11 | PMV |
|---|---|---|---|---|---|
| 0 (initialization state) | 0 | 0 | 1 | 2 | 0000 |
| 1 | 0 | 0 | 3 | 2 | 0000 |
| 2 | 0 | 0 | 4 | 2 | 0000 |
| **3** | 0 | 0 | 3 | 5 | **1000** |
| 4 | 0 | 0 | 6 | 2 | 0000 |
| **5** | 0 | 0 | 4 | 7 | **0010** |
| **6** | 0 | 0 | 3 | 5 | **1100** |
| **7** | 0 | 0 | 4 | 2 | **0001** |

Eight states are managed by the second split state machine comprising 4 states which could correspond to accepting states (which are in bold).

The following table 3 illustrates the handling performed by the third split state machine. This split state machine handles the bits 3:2 of input symbol.

|  | 00 | 01 | 10 | 11 | PMV |
|---|---|---|---|---|---|
| 0 (initialization state) | 1 | 0 | 2 | 0 | 0000 |
| 1 | 1 | 0 | 3 | 0 | 0000 |
| 2 | 1 | 4 | 5 | 0 | 0000 |
| 3 | 1 | 6 | 5 | 0 | 0000 |
| **4** | 7 | 0 | 2 | 0 | **1000** |
| 5 | 8 | 4 | 5 | 0 | 0000 |
| **6** | 7 | 0 | 2 | 0 | **1100** |

(continued)

|   | 00 | 01 | 10 | 11 | PMV |
|---|----|----|----|----|-----|
| 7 | 9 | 0 | 3 | 0 | 0000 |
| **8** | 1 | 0 | 3 | 0 | **0010** |
| **9** | 1 | 0 | 3 | 0 | **0001** |

Ten states are managed by the third split state machine comprising 4 states which could correspond to accepting states (which are in bold).

The following table 4 illustrates the handling performed by the fourth split state machine. This split state machine handles the bits 1:0 of input symbol.

|   | 00 | 01 | 10 | 11 | PMV |
|---|----|----|----|----|-----|
| 0 (initialization state) | 1 | 0 | 2 | 0 | 0000 |
| 1 | 1 | 3 | 0 | 2 | 0000 |
| 2 | 4 | 0 | 0 | 2 | 0000 |
| **3** | 1 | 0 | 5 | 6 | **1000** |
| 4 | 1 | 7 | 0 | 2 | 0000 |
| 5 | 1 | 0 | 0 | 8 | 0000 |
| **6** | 4 | 0 | 0 | 2 | **0010** |
| **7** | 1 | 0 | 5 | 6 | **1100** |
| **8** | 4 | 0 | 0 | 2 | **0001** |

Nine states are managed by the fourth split state machine comprising 4 states which could correspond to accepting states (which are in bold).

The first line of each table (current state=0) above indicates the initial states of the respective split state machine.

As can be observed in the previous tables, some PMV values are redundant in the different split state machine.

The following table, table 5, corresponds to the PMV_memory and contains the different PMV values used in split machines and their respective offsets without duplication.

Table 5

| Offset (PMV_ID) | PMV |
|---|---|
| 0 | 1000 |
| 1 | 1110 |
| 2 | 1111 |
| 3 | 0010 |
| 4 | 1100 |
| 5 | 0001 |

According to one embodiment of the first alternative, the following steps are carried out:

- replacing PMV value with PMV_ID in transition tables
- creating a PMV_ID for null value in PMV_memory.

In one embodiment of the present invention corresponding to the second alternative, a step of renaming is performed in order to avoid storing the offsets in the links_memory.

The renaming step carried out on the first split state machine can be illustrated by the following table, table 6:

| Initial state label | 0 | 1 | 2 | 3 | 4 |
|---|---|---|---|---|---|
| New state label | 3 (new initial state) | 4 | **0** | **1** | **2** |
| Type | 0 | 0 | 1 | 1 | 1 |
| PMV | 0000 | 0000 | **1000** | **1110** | **1111** |

New state label is equivalent to the associated PMV_ID for an accepting state. Label of a normal state has no particular meaning for PMV identification (indicated by associated type bit = 0).

The renaming step carried out on the second split state machine can be illustrated by the following table, table 7:

| Initial state label | 0 | 1 | 2 | 3 | 4 | 5 | 6 | 7 |
|---|---|---|---|---|---|---|---|---|
| New state label | 1 (new initialization state) | 2 | 6 | **0** | 7 | **3** | **4** | **5** |
| Type | 0 | 0 | 0 | 1 | 0 | 1 | 1 | 1 |
| PMV | 0000 | 0000 | 0000 | **1000** | 0000 | **0010** | **1100** | **0001** |

The renaming step carried out on the third split state machine can be illustrated by the following table, table 8:

| Initial state label | 0 | 1 | 2 | 3 | 4 | 5 | 6 | 7 | 8 | 9 |
|---|---|---|---|---|---|---|---|---|---|---|
| New state label | 1 (new initialization state) | 2 | 6 | 7 | **0** | 8 | **4** | 9 | **3** | **5** |
| Type | 0 | 0 | 0 | 0 | 1 | 0 | 1 | 0 | 1 | 1 |
| PMV | 0000 | 0000 | 0000 | 0000 | **1000** | 0000 | **1100** | 0000 | **00 10** | **00 01** |

The renaming step carried out on the fourth split state machine can be illustrated by the following table, table 9:

| Initial state label | 0 | 1 | 2 | 3 | 4 | 5 | 6 | 7 | 8 |
|---|---|---|---|---|---|---|---|---|---|
| New state label | 1 (new initializatio n state) | 2 | 6 | **0** | 7 | 8 | **3** | **4** | **5** |
| Type | 0 | 0 | 0 | 1 | 0 | 0 | 1 | 1 | 1 |
| PMV | 0000 | 0000 | 0000 | **1000** | 0000 | 0000 | **0010** | **1100** | **0001** |

The characters in bold correspond to accepting states in the four tables above.

At this step, type_memory can be filled for each split state machine: type bit is respectively written at "new state label" offset in type_memory.

The initial state register can also be updated there. An initial state configuration of the different split states machines can be now 3:1:1:1 where each number, from left to right, corresponds respectively to initial current state of first to the fourth split state machine. This initial state register is used upon activation of the state machines to load them in the correct initial state.

Once the renaming of states has been determined, the transition tables can be updated. Tables 10 to 13 show the new transition tables. Once these tables are determined then the memory links_memory can be filled for each split state machine.

The tables 10-13 correspond to the transition tables after renaming step consisting to replace the previous label of state value with a new label. Moreover, each of this transition table has been sorted by ascending order of current state.

The following table 10 corresponds to the first split state machine.

| | 00 | 01 | 10 | 11 | Type |
|---|---|---|---|---|---|
| **0** | 3 | 1 | 3 | 3 | 1 |

(continued)

|  | 00 | 01 | 10 | 11 | Type |
|---|---|---|---|---|---|
| **1** | 3 | 2 | 3 | 3 | 1 |
| **2** | 3 | 2 | 3 | 3 | 1 |
| 3 (initialization state) | 3 | 4 | 3 | 3 | 0 |
| 4 | 3 | 0 | 3 | 3 | 0 |
| - | - | - | - | - | - |
| - | - | - | - | - | - |
| - | - | - | - | - | - |
| - | - | - | - | - | - |

The type bit associated with the states 3 and 4 is equal to 0, then these states 3 and 4 correspond to non accepting states (PMV null).

In addition, after the renaming state, according to table 6:

- the state 0 corresponds to a PMV equal to 1000;
- the state 1 corresponds to a PMV equal to 1110;
- the state 2 corresponds to a PMV equal to 1111;
- the state 3 corresponds to a PMV equal to 0000;
- the state 4 corresponds to a PMV equal to 0000.

The following table 11 corresponds to the second split state machine.

|  | 00 | 01 | 10 | 11 | Type |
|---|---|---|---|---|---|
| **0** | 1 | 1 | 0 | 3 | 1 |
| 1 (initialization state) | 1 | 1 | 2 | 6 | 0 |
| 2 | 1 | 1 | 0 | 6 | 0 |
| **3** | 1 | 1 | 7 | 5 | 1 |
| **4** | 1 | 1 | 0 | 3 | 1 |
| **5** | 1 | 1 | 7 | 6 | 1 |
| 6 | 1 | 1 | 7 | 6 | 0 |
| 7 | 1 | 1 | 4 | 6 | 0 |
| 8 | - | - | - | - | - |
| 9 | - | - | - | - | - |

The type bit associated with the states 1, 2, 6 and 7, is equal to 0, then these states correspond to non accepting states (PMV null).

In addition, after the renaming state, according to table 7:

- the state 0 corresponds to a PMV equal to 1000;

- the state 1 corresponds to a PMV equal to 0000;

- the state 2 corresponds to a PMV equal to 0000;

- the state 3 corresponds to a PMV equal to 0010;

- the state 4 corresponds to a PMV equal to 1100;

- the state 5 corresponds to a PMV equal to 0001;

- the state 6 corresponds to a PMV equal to 0000;

- the state 7 corresponds to a PMV equal to 0000.

The following table 12 corresponds to the third split state machine.

|  | 00 | 01 | 10 | 11 | Type |
|---|---|---|---|---|---|
| **0** | 9 | 1 | 6 | 1 | 1 |
| 1 (initialization state) | 2 | 1 | 6 | 1 | 0 |
| 2 | 2 | 1 | 7 | 1 | 0 |
| **3** | 2 | 1 | 7 | 1 | 1 |
| **4** | 9 | 1 | 6 | 1 | 1 |
| **5** | 2 | 1 | 7 | 1 | 1 |
| 6 | 2 | 0 | 8 | 1 | 0 |
| 7 | 2 | 4 | 8 | 1 | 0 |
| 8 | 3 | 0 | 8 | 1 | 0 |
| 9 | 5 | 1 | 7 | 1 | 0 |

The type bit associated with the states 1, 2, 6 to 9, is equal to 0, then these states correspond to non accepting states (PMV nul).
In addition, after the renaming state, according to table 8:

- the state 0 corresponds to a PMV equal to 1000;

- the state 1 corresponds to a PMV equal to 0000;

- the state 2 corresponds to a PMV equal to 0000;

- the state 3 corresponds to a PMV equal to 0010;

- the state 4 corresponds to a PMV equal to 1100;

- the state 5 corresponds to a PMV equal to 0001;

- the states 6 to 9 correspond to a PMV equal to 0000.

The following table 13 corresponds to the fourth split state machine.

|  | 00 | 01 | 10 | 11 | Type |
|---|---|---|---|---|---|
| **0** | 2 | 2 | 1 | 8 | 1 |
| 1 (initialization state) | 2 | 1 | 6 | 1 | 0 |
| 2 | 2 | 0 | 1 | 6 | 0 |
| **3** | 7 | 1 | 1 | 6 | 1 |
| **4** | 2 | 1 | 8 | 3 | 1 |
| **5** | 7 | 1 | 1 | 6 | 1 |
| 6 | 7 | 1 | 1 | 6 | 0 |
| 7 | 2 | 4 | 1 | 6 | 0 |
| 8 | 2 | 1 | 1 | 5 | 0 |

(continued)

|   | 00 | 01 | 10 | 11 | Type |
|---|----|----|----|----|------|
| 9 | -  | -  | -  | -  | -    |

The type bit associated with the states 1, 2, 6 to 8, is equal to 0, then these states correspond to non accepting states (PMV null).

In addition, after the renaming state, according to table 8:

- the state 0 corresponds to a PMV equal to 1000;

- the state 1 corresponds to a PMV equal to 0000;

- the state 2 corresponds to a PMV equal to 0000;

- the state 3 corresponds to a PMV equal to 0010;

- the state 4 corresponds to a PMV equal to 1100;

- the state 5 corresponds to a PMV equal to 0001;

- the states 6 to 8 correspond to a PMV equal to 0000.

In one embodiment of the present invention, the memory capacity required for handling the PMV in a split state machine environment can be advantageously reduced. Indeed, no storage is required to store PMV associated to non accepting states. This aspect allows reducing substantially the memory amount requirement because, generally, the non accepting states are the most frequent states.

In addition, as the PMV_memory is shared by all split state machines, it allows storing only the PMV associated to the accepting states of the different split state machines, while avoiding duplication of values when there is common PMV between different split state machines.

Consequently, the number of accepting states that can be identified can now be more important.

Moreover, by reducing the memory capacity used, all the memories described herein may be implemented inside the device itself, like a FPGA or ASIC, even for large state machines.

Such an implementation according to one embodiment of the present invention allows handling input symbols of different widths as for instance 8 or 16 bits, with split state machine that can handle respectively 2 or 4 bits, but other sizes are also possible with more split state machines (like 32 bits input symbol with 8 split state machines).

**Claims**

1. Method of string matching using N split state machines (103) corresponding in combination to an original state machine which is adapted to recognize at least one string of characters based on successive input symbols ; each of the N split state machines being in charge of handling a respective part of an input symbol;
   a partial matching vector value being associated to each state of each split state machine ;
   N memory contexts (11) being in charge of storing information which allow determining a next state depending on a current state and on the part of the input symbol being currently processed ;
   wherein, in said N memory contexts, an associated identifier is indicated in association with each state of said N split state machines; and
   wherein an association of the identifiers and the partial matching vector values is stored in a common memory (12) which is shared by said N split state machines.

2. Method of string matching according to claim 1, wherein the common memory (12) comprises different partial matching vector values and the associated identifiers are respective offsets of partial matching vector value stored in the common memory.

3. Method of string matching according to claim 1, wherein one state context per state is stored in the memory context referred with a state label and the associated identifier is directly the state label.

4. Method of string matching according to claim 3, comprising the following steps:

   - generating said N split state machines from said original source state machine, each of said N split state machines comprising different states which are referred with respective initial labels ;
   - replacing the initial label by a new label, in order to obtain, for each state of each split state machines, a new label equal to an offset of the partial matching vector value which is associated to said state and which is stored in the common memory.

5. Method of string matching according to any one of the preceding claims, wherein the different partial matching vector values are stored only one time in the common memory.

6. Device adapted to carry out a method of string matching based on N split state machines (103) corresponding in combination to an original state machine which is adapted to recognize at least one string of characters based on successive input symbols ;
   each of the N split state machines being in charge of handling a respective part of an input symbol;
   a partial matching vector value being associated to each state of each split state machine ;
   said device comprising :

   - N memory contexts (11) being in charge of storing information which allow determining a next state depending on a current state and on the part of the input symbol being currently received; in said N memory contexts, an associated identifier is stored in association with each state of said N split state machines; and
   - a common memory (12) adapted to store an association of the identifiers and the partial matching vector values, said common memory being shared by said N split state machines.

7. Device according to claim 6, wherein the common memory comprises different partial matching vector values and the associated identifiers correspond to respective offsets of storage in said common memory.

8. Device according to claim 6, wherein the memory context being adapted to store each state referred with a state label, the associated identifier is directly the state label.

9. Device according to claim 8, further comprising:

   - a generation unit adapted for generating said N split state machines from said original source state machine, each of said N split state machines comprising different states which are referred with respective initial labels ;
   - a replacing unit adapted for replacing the initial label by a new label, in order to obtain, for each state of each split state machines, a new label equal to an offset of the partial matching vector value which is associated to said state and which is stored in the common memory.

10. Device according to any one of the preceding claims 7 to 9, wherein the different partial matching vector values are stored only one time in the common memory.

11. A computer program product comprising instructions for implementing the steps of a method according to any one of claims 1 through 5 when loaded and run on computer means of a device according to any one of claims 6 through 10.

FIG.1.

FIG.2.

European Patent Office

**EUROPEAN SEARCH REPORT**

Application Number

EP 07 11 9682

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIN TAN ET AL: "A High Throughput String Matching Architecture for Intrusion Detection and Prevention" COMPUTER ARCHITECTURE, 2005. ISCA '05. PROCEEDINGS. 32ND INTERNATIONAL SYMPOSIUM ON MADISON, WI, USA 04-08 JUNE 2005, PISCATAWAY, NJ, USA,IEEE, 4 June 2005 (2005-06-04), pages 112-122, XP010807899 ISBN: 978-0-7695-2270-8 * the whole document * ----- | 1-3,6-8, 11 | INV. G06F17/30 |
| X | WO 2007/103397 A (UNIV CALIFORNIA [US]; SHERWOOD TIMOTHY P [US]; TAN LIN [US]) 13 September 2007 (2007-09-13) * the whole document * ----- | 1-3,6-8, 11 | |

TECHNICAL FIELDS SEARCHED (IPC)

G06F

The present search report has been drawn up for all claims

| Place of search | Date of completion of the search | Examiner |
|---|---|---|
| Munich | 2 June 2008 | Eichenauer, Lars |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 11 9682

This annex lists the patent family members relating to the patent documents cited in the above-mentioned European search report.
The members are as contained in the European Patent Office EDP file on
The European Patent Office is in no way liable for these particulars which are merely given for the purpose of information.

02-06-2008

| Patent document cited in search report | Publication date | Patent family member(s) | Publication date |
|---|---|---|---|
| WO 2007103397 A | 13-09-2007 | NONE | |

For more details about this annex : see Official Journal of the European Patent Office, No. 12/82